# EUROPÄISCHE PATENTSCHRIFT

(11) **EP 3 058 123 B1**
(45) Veröffentlichungstag und Bekanntmachung des Hinweises auf die Patenterteilung: **21.08.2019**
(21) Anmeldenummer: 14792418.7
(22) Anmeldetag: 16.10.2014
(51) Int. Cl.: D03D 1/00, D03D 9/00, D03D 13/00, D03D 15/00, D03D 19/00, E06B 9/24, E04F 10/02

(54) **LICHTLENKSYSTEM**
LIGHT DEFLECTING SYSTEM
SYSTÈME POUR GUIDER DE LA LUMIÈRE

(30) Priorität: 16.10.2013 EP 13189005
(43) Veröffentlichungstag der Anmeldung: 24.08.2016
(73) Patentinhaber: ETTLIN AKTIENGESELLSCHAFT, 76275 Ettlingen (DE)
(72) Erfinder: HÄNSCH, Frauke Susanne, D-86152 Augsburg (DE)
(74) Vertreter: Pfiz, Thomas
(86) Internationale Anmeldenummer: PCT/EP2014/072253
(87) Internationale Veröffentlichungsnummer: WO 2015/055777

(56) Entgegenhaltungen:
- DE-U1- 20 104 051
- DE-U1-202005 005 957
- US-A- 2 886 697
- US-A- 3 005 524
- US-B1- 7 554 730

## Beschreibung

Die Erfindung betrifft eine Lichtlenksystem insbesondere für Sonnenlicht mit einem textilen Flächengebilde, welches in einem Lichteinfallsbereich vor einem abzuschirmenden oder auszuleuchtenden Raum positionierbar ist bzw. im Gebrauchszustand davor positioniert ist und eine aus einer Vielzahl von Schussfäden gebildete Schussfadenlage aufweist, wobei die Schussfäden geradlinig gestreckt sind und Gitteröffnungen des Flächengebildes begrenzen.

Aus der DE 201 04 051 U1 ist ein Stoff für Sonnenschutzeinrichtungen, insbesondere für Rollos, Raffrollos oder Vertikallamellen bekannt, mit in einer ersten Richtung verlaufenden ersten Fäden und hierzu im wesentlichen quer oder senkrecht verlaufenden zweiten Fäden, wobei mindestens einige der ersten Fäden Rippen bilden, die in der ersten Richtung verlaufen und mit ihrem Querschnitt aus der Stoffebene beziehungsweise der von den zweiten Fäden gebildeten Ebene ein vorgegebenes Maß abstehen.

Aus der WO 2012/160115 A1 bekannt ist eine Wetterschutzvorrichtung mit einem eine Abschirmung gegen Witterungseinflüsse und auch Sonneneinstrahlung bildenden textilen Flächengebilde, welches seine Schutzfunktionen dadurch entfaltet, dass die Kettfäden und Schussfäden langgestrecktrechteckige Gitteröffnungen begrenzen, wobei die Öffnungslänge mindestens das 10-fache der Öffnungsbreite beträgt. Damit wird erreicht, dass unerwünschte Strahlung und Niederschlag durch die engen Längsbegrenzungen abgehalten wird. Aufgrund der runden Fadenquerschnitte erfolgen allerdings auch Lichtreflexionen in den abgeschirmten Bereich hinein.

Ausgehend hiervon liegt der Erfindung die Aufgabe zugrunde, die im Stand der Technik bekannten Vorrichtungen weiter zu verbessern und eine flächige Struktur zur gezielten Beeinflussung des Lichteinfalls vor allem von Sonnen- bzw. Tageslicht in einem Gebäudebereich zu schaffen.

Zur Lösung dieser Aufgabe wird die im unabhägigen Patentanspruch angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch Anpassung einer Gewebetopographie eine definierte Lichtlenkstruktur zu schaffen.

Erfindungsgemäß ist vorgesehen, dass die Schussfäden in Schussfadengruppen mit gruppenweise, d.h. in jeder Gruppe variierenden Fadendurchmessern angeordnet sind, wobei die Seitenpartien der Schussfadengruppen einheitlich orientiert sind. Aufgrund der in jeder Gruppe variierenden, von Gruppe zu Gruppe sich wiederholenden Fadendurchmesser ergeben sich bezogen auf die Gruppe ebenfalls unterschiedlich orientierte Seitenpartien gleichsam als Einhüllende der Schussfadengruppe bzw. des Rapports, so dass die vorstehend genannten Vorteile ebenfalls erzielbar sind. Der Rapport bildet den kleinsten sich wiederholenden Teil der Bindung, d.h. die Schussfadengruppen sitzen immer wieder in gleicher Art und Wiese übereinander.

Für eine gezielte Beeinflussung der Lichtstrahlung ist es vorteilhaft, wenn mindestens eine von dem Raum abgewandte bzw. dem Lichteinfallsbereich zugewandte Seitenpartie als Lichtlenkfläche mit einfallendem Licht beaufschlagt ist.

Um eine effektive Abschattung zu ermöglichen und Blendung sowie ungewollten Wärmeeintrag zu vermeiden, ist es vorteilhaft, wenn die Schussfäden bzw. Schussfadengruppen mit mindestens einer Seitenpartie einen Reflektor zur Rückstrahlung von einfallendem Licht bilden. Vorteilhafterweise sollten die Schussfäden quer zur Ebene des Strahlengangs verlaufen.

Eine weitere Verbesserung der Abschattung bei gleichzeitig guter Durchsicht wird dadurch erreicht, dass die Schussfäden mit einer Licht reflektierenden oder absorbierenden Beschichtung versehen sind und/oder dunkel eingefärbt sind.

Um gezielt Strahlungsbereiche insbesondere bei schräg von oben einfallendem Sonnenlicht zu beeinflussen, ist es von Vorteil, wenn die Schussfäden einheitlich in einem begrenzten Winkelbereich reflektierend oder absorbierend beschichtet sind.

Eine weitere Funktionalität im Sinne einer gezielten Lichtnutzung lässt sich dadurch erreichen, dass die Lichtlenkfläche eine lichtdurchlässige Oberfläche bildet, wobei die Schussfäden transparent sind, so dass das Licht von der Lichteinfallsseite weg und somit in den auszuleuchtenden Raum hinein gelenkt wird. Dadurch lässt sich die Helligkeit in Innenräumen ohne Einsatz von Kunstlicht beeinflussen.

Vorteilhafterweise sind die Schussfäden aus monofilem Fadenmaterial gebildet, so dass definierte optische Oberflächen geschaffen werden. Um ggf. eine ungerichtete Streuung und damit auch einen Blendschutz zu ermöglichen, können ergänzend auch multifilamente Garne eingesetzt werden.

Erfindungsgemäß ist vorgesehen, dass das Flächengebilde eine zweilagige Fadenstruktur aus eine Kettfadenlage bildenden Kettfäden und eine dazu parallele Schussfadenlage bildenden Schussfäden aufweist, wobei die Kettfäden und die Schussfäden durch Bindefäden miteinander verbunden sind und die Schussfäden an einer einzigen Seite der Kettfadenlage aufliegen.

Bevorzugt verlaufen die Schussfäden horizontal, wobei die Schussfadenlage sich vertikal erstreckt.

Um die Nutzung zu erleichtern, ist es vorteilhaft, wenn das textile Flächengebilde in einer Haltekonstruktion flächig aufgespannt oder ausrollbar ist. Dabei kann es auch von Vorteil sein, wenn das textile Flächengebilde in einer transparenten Trägerplatte bzw. in einer Verbundstruktur, bspw. einem Verbundglas eingebettet ist.

Eine weitere vorteilhafte Ausführung sieht vor, dass das textile Flächengebilde in einer Haltekonstruktion an der Außenseite eines Gebäudes vor einer Gebäudeöffnung angeordnet bzw. positionierbar ist, wobei die Schussfäden horizontal verlaufen.

Um eine gezielte Lichtlenkung zu ermöglichen, ist es von besonderem Vorteil, wenn die Schussfäden an ihrer dem Lichteinfallsbereich zugewandten Lichteinfallseite bzw. Außenseite frei von Kettfäden sind und somit durchgängig über ihre Länge nicht von Kettfäden bedeckt sind.

Um eine winkelselektive und damit vom Sonnenstand abhängige Reflektion oder Transmission zu erzielen, ist es vorteilhaft, wenn die Schussfäden horizontal verlaufen und eine schräg nach oben in den Lichteinfallsbereich weisende Reflexionsfläche besitzen, und wenn die Schussfäden in einem gegenseitigen Abstand gehalten sind, wobei der Abstand so bestimmt ist, dass schräg von oben einfallendes Licht oberhalb eines gegebenen Höhengrenzwinkels in den Lichteinfallsbereich zurückgeworfen und darunter in den von dem Lichteinfallsbereich abgewandten Raum zwischen den Schussfäden durchgelassen wird.

Besonders günstig ist es, wenn der Abstand der Schussfäden einen definierten einheitlichen Wert zwischen 0,05 mm und 0,1 mm besitzt.

Um einen geeigneten Übergang zwischen einer Reflektion von Sonnenlicht im Sommer und einer Durchlässigkeit im Winter zu schaffen, sollte der Höhengrenzwinkel im Bereich zwischen 40° und 50° liegen.

Im Folgenden wird die Erfindung anhand der in der Zeichnung schematisch dargestellten Ausführungsbeispiele näher erläutert. Es zeigen:
- Fig. 1: eine Lichtlenksystem mit einem vor einem Gebäude angeordneten textilen Flächengebilde in schaubildlicher Darstellung;
- Fig. 2 und 3: das als zweilagiges Drehergewebe ausgebildete textile Flächengebilde in ausschnittsweiser Draufsicht auf die Schussfadenund die Kettfadenseite;
- Fig. 4: ein nicht erfindungsgemäßes textiles Flächengebilde mit triangularen Schussfäden und daran reflektierten Lichtstrahlen in einem abgebrochenen Vertikalschnitt;
- Fig. 5: die erfindungsgemäße Ausführungsform mit Schussfadengruppen unterschiedlichen Durchmessers in einer Fig. 4 entsprechenden Darstellung;
- Fig. 6 und 7: Ausführungsbeispiele des textilen Flächengebildes mit winkelselektivem Durchlass von Lichtstrahlen in einer Fig. 4 und 5 entsprechenden Darstellung.

Das in der Zeichnung dargestellte Lichtlenksystem 10 umfasst ein textiles Flächengebilde 12, das in einem Lichteinfallsbereich 13 vor einem abzuschirmenden oder auszuleuchtenden Raum 14 im Bereich einer Gebäudeöffnung außenseitig an einem Gebäude 16 angeordnet ist. Hierfür ist das textile Flächengebilde 12 bahnförmig als Rollo aus einer Wickelvorrichtung 18 ausziehbar. Der Raum 14 hinter dem textilen Flächengebilde 12 wird dann je nach Ausführungsform des Flächengebildes 12 gegen direkte Sonnenstrahlung abgeschattet bzw. gezielt damit ausgeleuchtet.

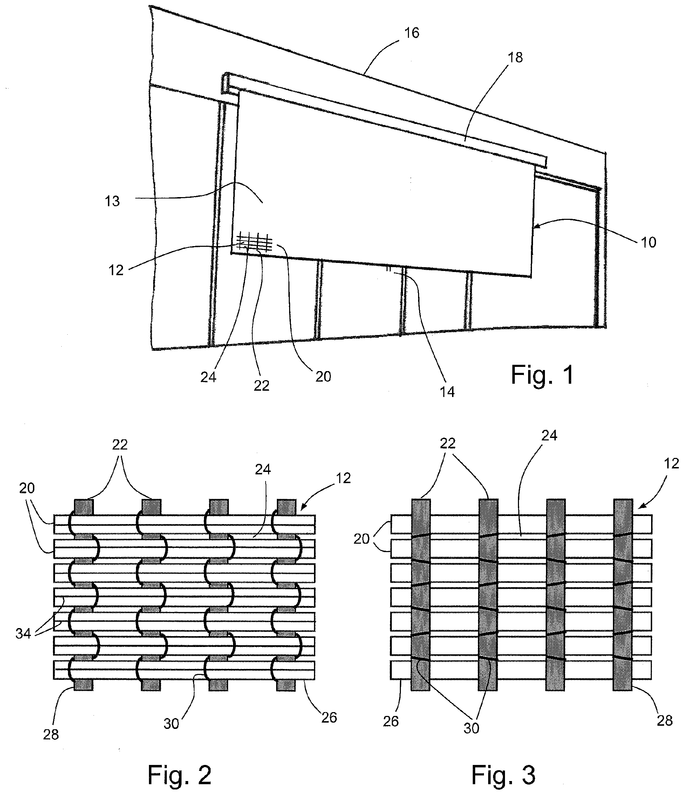

Wie in Fig. 1 nicht maßstäblich angedeutet, weist das textile Flächengebilde 12 gitterartig miteinander verbundene Schussfäden 20 und Kettfäden 22 auf. Die Kettfäden 22 verlaufen mit relativ großem gegenseitigem Fadenabstand in vertikaler Richtung, während die horizontalen Schussfäden 20 unter Einhaltung eines relativ engen gegenseitigen Fadenabstandes die Kettfäden 22 rechtwinklig kreuzen. Auf diese Weise werden in dem gitterförmigen Flächengebilde 12 rechteckförmige Gitteröffnungen 24 freigehalten, die eine gewisse Durchsicht gewähren.

Wie in Fig. 2 und 3 veranschaulicht, weist das textile Flächengebilde 12 eine zweilagige Flächenstruktur auf, in der die Schussfäden 20 und Kettfäden 22 geradlinig gestreckt sind und jeweils eine eigene ebene Fadenlage 26, 28 bilden. Die beiden Fadenlagen 26, 28 spannen jeweils eine einzige, gesonderte Ebene auf. Die Schussfadenlage 26 liegt somit einseitig bzw. außenseitig auf der Kettfadenlage 28 auf, wobei die Kettfadenlage 28 ausschließlich die dem Gebäuderaum 14 zugewandte Gewebeinnenseite und die Schussfadenlage 26 die nach außen gegen die Lichtquelle bzw. die Sonne gerichtete Gewebeaußenseite bildet.

In Richtung der Flächennormalen des textilen Flächengebildes 12 gesehen ergeben sich somit lichte Gitteröffnungen 24, die längsseitig durch die Schussfäden 20 begrenzt sind. Zur gegenseitigen Lagefixierung werden die Schussfäden 20 und Kettfäden 22 durch vergleichsweise dünne Bindefäden 30 nach Art einer Dreherbindung umschlungen. Die Bindefäden 30 verlaufen entlang der Kettfäden 22. Sie durchqueren dabei die beiden Fadenlagen 26, 28 der Kett- und Schussfäden und umgreifen deren voneinander abgewandte Außenseiten.

Zweckmäßig bestehen die Kett-, Schuss- und Bindefäden aus einem monofilen, polymeren Fadenmaterial, beispielsweise aus PET. Die Fadenstärken der Schuss- und Kettfäden 20, 22 liegen im Bereich zwischen 0,1 bis 2,4 mm, während die dünneren Bindefäden 30 eine Stärke von 0,05 bis 0,1 mm besitzen. Bei nicht runden Querschnitten wird die maximale Querabmessung als Fadenstärke bestimmt. Die Gitteröffnungen 24 ergeben sich durch die Abstände zwischen benachbarten Schussfäden 20 von 0,05 bis 2 mm und die Abstände von Kettfadenmitte zu Kettfadenmitte von 0,6 bis 5 mm.

In einer nicht erfindungsgemäßen Ausführungsform weisen die Schussfäden 20 einen nichtzirkularen Fadenquerschnitt auf und sind unter einheitlicher Orientierung parallel zueinander angeordnet. Eine einheitliche Orientierung lässt sich dadurch erreichen, dass die Schussfäden 20 beim Schusseintrag tangential und somit verdrehungsfrei von einer Vorratsrolle abgezogen und unter Zugspannung gehalten werden.

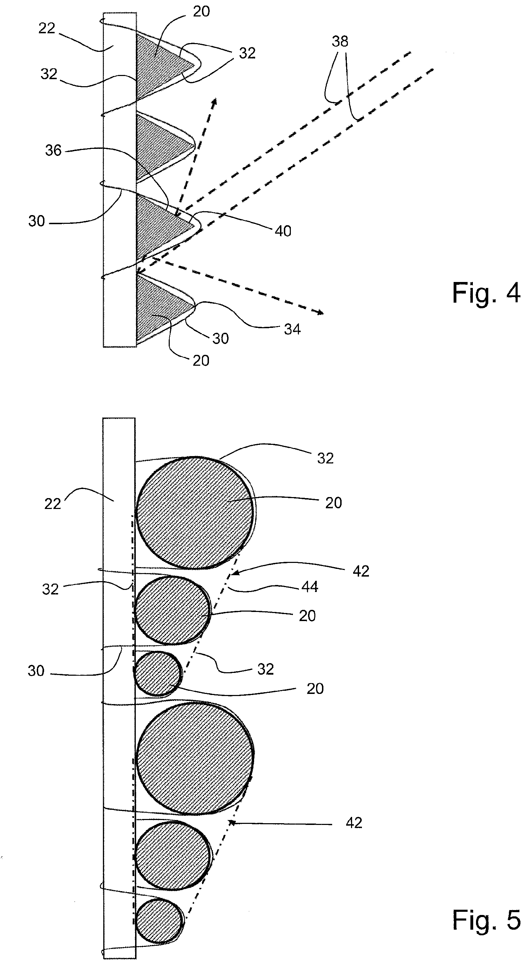

Wie am besten aus Fig. 4 ersichtlich, besitzen die im Querschnitt dreieckförmigen Schussfäden 20 drei planare Seitenflächen bzw. Seitenpartien 32, die durch spitzwinklig zulaufende Kanten 34 voneinander abgegrenzt sind. Aufgrund der einheitlichen Orientierung liegen alle Schussfäden 20 mit einer Seite auf der Lage der Kettfäden 22 auf, während die von den Kettfäden 22 weg geneigte Seitenpartien 32 als Lichtlenkfläche 36 mit einfallendem Sonnenlicht 38 beaufschlagbar sind.

In der in Fig. 4 veranschaulichten Konfiguration bilden die Schussfäden 20 als Mikrolamellen einen Reflektor zur Rückstrahlung des einfallenden Lichts 38. Dabei ist zumindest die Lichtlenkfläche 36 mit einer reflektierenden Beschichtung 40 versehen, so dass das Licht spiegelnd reflektiert wird. Eine solche segmentierte Beschichtung kann beispielsweise durch gerichtetes Bedampfen der Schussfäden 20 mit einer Metallschicht hergestellt werden. Bei einer vollflächigen reflektierenden Beschichtung aller Seitenpartien können auch Mehrfachreflexionen zu einer Rückstrahlung des Lichts 38 und damit zu einer effektiven Abschattung des Raums 14 hinter dem textilen Flächengebilde 12 führen.

Um zu vermeiden, dass zwischen den Fäden 20, 22 reflektierte Lichtstrahlung durch das Flächengebilde 12 hindurchtritt, können dem Fadenmaterial auch strahlungsabsorbierende Additive zugegeben werden. Die Durchsicht von innen nach außen lässt sich dadurch verbessern, dass das Fadenmaterial dunkel eingefärbt wird.

Der Reflexionsgrad des textilen Flächengebildes 12 kann über die Schussfadendichte und damit die Fadenabstände und über die Fadendurchmesser eingestellt werden. Grundsätzlich ist auch eine zonenweise Variation der Fadendichten und Fadenstärken möglich.

In einer weiteren Variante bestehen die Schuss- und Kettfäden 20, 22 aus einem transparenten Fadenmaterial, wobei das einfallende Licht durch Teilreflektion und Brechung an den Lichtlenkflächen 36 zur gezielten Ausleuchtung in den Raum 14 hinein gelenkt wird. Denkbar sind auch Schussfäden 20 mit Kombinationen von reflektiven und transmissiven Seitenpartien 32, beispielsweise um eine direkte Sonneneinstrahlung gegen den Boden eines Raums 14 zu vermeiden und im Übrigen aber eine Ausleuchtung zu ermöglichen.

Bei der in Fig. 5 gezeigten Ausführungsform sind gleiche oder ähnliche Teile wie vorstehend beschrieben mit denselben Bezugszeichen versehen. Der wesentliche Unterschied besteht darin, dass die Schussfäden 20 einen zirkularen Querschnitt aufweisen und in Schussfadengruppen 42 mit gruppenweise variierenden Fadendurchmessern angeordnet sind. Dies bedeutet, dass in jeder Schussfadengruppe 42 mehrere Schussfäden 20 gruppiert sind, die sich in ihrem Fadendurchmesser voneinander unterscheiden. Die Schussfadengruppen 42 sind dabei einheitlich orientiert, wobei Seitenpartien 32 durch die Einhüllende 44 der jeweiligen Schussfäden 20 definiert werden. Auch hier wird eine Anordnung ähnlich einer Lamelle verwirklicht.

Durch geeignete Anpassung der Fadendurchmesser kann die Abschattung in einem gewünschten Winkelbereich beeinflusst werden. Dabei kann die schräg nach unten weisende Seitenpartie 32 durch eine gemeinsame Tangente an die Fadenquerschnitte bestimmt sein.

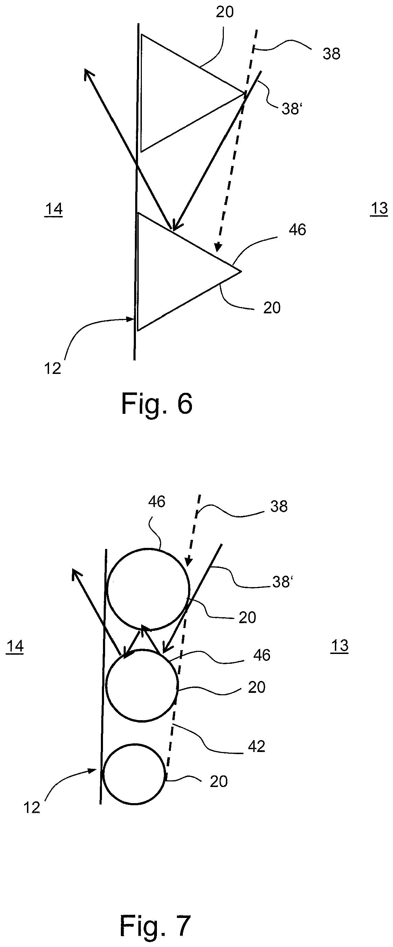

Fig. 6 und 7 veranschaulicht die Möglichkeit zur winkelselektiven Beschattung bzw. Ausleuchtung des Raums 14 je nach Sonnenstand. Dies bedeutet, dass das textile Flächengebilde 12 bei einem hohen Sonnenstrand und damit einem steilen Einstrahl- bzw. Auftreffwinkel möglichst viele der Sonnenstrahlen 38 reflektiert. Bei einem flachen Winkel wird hingegen möglichst viel der Strahlung 38' in den Raum 14 geleitet. Auf diese Weise kann eine jahreszeitlich angepasste Nutzung der Sonnenstrahlung erreicht werden.

Um diese Eigenschaft im textilen Flächengebilde 12 zu realisieren, sollten die horizontal verlaufenden Schussfäden 20 eine schräg nach oben in den Lichteinfallsbereich 13 weisende Reflexionsfläche 46 besitzen. Dabei wird der gegenseitige Abstand der Schussfäden im Gewebe so eingestellt, dass gerichtet schräg von oben einfallendes Licht oberhalb eines gegebenen Höhengrenzwinkels in den Lichteinfallsbereich 13 zurückgeworfen und darunter durch die Fadenlücke zwischen den Schussfäden 20 hindurch in den Raum14 durchgelassen wird. Dabei können auch Mehrfachreflexionen auftreten, wie es in Fig. 7 für die Fadengruppe 42 veranschaulicht ist. Dort wirken die schräg nach oben weisenden Umfangsbereiche der Schussfäden 20 als Reflexionsfläche 46 für die primäre Winkelselektion, wobei aufgrund der Durchmesserabnahme im Wesentlichen der obere Schussfaden jeder Fadengruppe selektiv für die Rückreflexion in den Einfallsbereich 13 ist. Zweckmäßig sollte der Schussfadenabstand im Bereich von 0,05 mm und 0,1 mm liegen. Die Abstandsanpassung kann durch einfache Versuche oder auch einfache geometrische Überlegungen ermittelt werden.

Grundsätzlich ist es anstelle der beschriebenen Halbdreherbindung zur Herstellung einer ebenen Schussfadenlage 26 auch möglich, eine Struktur mit gestreckten Schussfäden 20 durch eine Wirkware (Wirken und Rascheln), ein Gelege oder ein Gewebe z.B. in Leinwandbindung zu realisieren. Bei der nicht erfindungsgemäßen Wirkware werden die gestreckten Schussfäden in einer Masche gehalten. Die Maschenstäbchen ersetzen in diesem Fall den Kettfaden. Beim Gelege werden Fadenlagen unidirektional aufeinander abgelegt. Die Struktur wird dann durch Vermaschung und Vernähen fixiert. In nicht erfindungsgemäßer Leinwandbindung können weitgehend geradlinige Schussfäden dadurch realisiert werden, dass der Durchmesser des Schusses im Vergleich zu den Kettfäden deutlich größer ist und die Kettfadenspannung während der Produktion niedrig gehalten wird. So onduliert nur das Kettfadensystem, während der Schuss gestreckt zwischen den Kettfäden liegt. In allen Fällen ergeben sich im Wesentlichen geradlinig gestreckte Schussfäden, wobei die Abweichungen von der Linearität klein gegenüber dem Fadendurchmesser sind.

## Patentansprüche

1. Lichtlenksystem insbesondere für Sonnenlicht mit einem textilen Flächengebilde (12), welches in einem Lichteinfallsbereich vor einem abzuschirmenden oder auszuleuchtenden Raum (14) positionierbar ist und eine aus einer Vielzahl von Schussfäden (20) gebildete Schussfadenlage (26) aufweist, wobei die Schussfäden (20) im Wesentlichen geradlinig gestreckt sind und Gitteröffnungen (24) des Flächengebildes (12) begrenzen, wobei die Schussfäden (20) in Schussfadengruppen (42) mit gruppenweise variierenden Fadendurchmessern angeordnet sind, so dass in jeder Schussfadengruppe (42) mehrere Schussfäden (20) gruppiert sind, die sich in ihrem Fadendurchmesser voneinander unterscheiden, wobei die Seitenpartien (32) der Schussfadengruppen (42) einheitlich orientiert sind, **dadurch gekennzeichnet, dass** das Flächengebilde (12) eine zweilagige Fadenstruktur aus eine Kettfadenlage (28) bildenden Kettfäden (22) und eine dazu parallele Schussfadenlage (26) bildenden Schussfäden (20) aufweist, wobei die Kettfäden (22) und die Schussfäden (20) durch Bindefäden (30) miteinander verbunden sind und die Schussfäden (20) an einer Seite der Kettfadenlage (28) aufliegen.

2. Lichtlenksystem nach Anspruch 1, **dadurch gekennzeichnet, dass** die Schussfadengruppen (42) mit mindestens einer Seitenpartie (32) einen Reflektor zur Rückstrahlung von einfallendem Licht bilden.

3. Lichtlenksystem nach Anspruch 1 oder 2, **dadurch gekennzeichnet, dass** mindestens eine von dem Raum (14) abgewandte Seitenpartie (32) als Lichtlenkfläche (36) mit einfallendem Licht beaufschlagbar ist.

4. Lichtlenksystem nach einem der Ansprüche 1 bis 3, **dadurch gekennzeichnet, dass** die Schussfäden (20) mit einer Licht reflektierenden oder absorbierenden Beschichtung (40) versehen sind und/oder dunkel eingefärbt sind.

5. Lichtlenksystem nach einem der Ansprüche 1 bis 4, **dadurch gekennzeichnet, dass** die Schussfäden (20) einheitlich in einem begrenzten Winkelbereich reflektierend oder absorbierend beschichtet sind.

6. Lichtlenksystem nach Anspruch 3, **dadurch gekennzeichnet, dass** die Lichtlenkfläche (36) eine lichtdurchlässige Oberfläche bildet, so dass das Licht durch die transparenten Schussfäden (20) in den auszuleuchtenden Raum (14) hinein gelenkt wird.

7. Lichtlenksystem nach einem der Ansprüche 1 bis 6, **dadurch gekennzeichnet, dass** die Schussfäden (20) aus monofilem Fadenmaterial gebildet sind.

8. Lichtlenksystem nach einem der Ansprüche 1 bis 7, **dadurch gekennzeichnet, dass** das textile Flächengebilde (12) in einer Haltekonstruktion (18) flächig aufgespannt oder ausrollbar ist.

9. Lichtlenksystem nach einem der Ansprüche 1 bis 8, **dadurch gekennzeichnet, dass** das textile Flächengebilde (12) in einer transparenten Trägerplatte oder Verbundstruktur, insbesondere in einem Verbundglas eingebettet ist.

10. Lichtlenksystem nach einem der Ansprüche 1 bis 9, **dadurch gekennzeichnet, dass** das textile Flächengebilde (12) an der Außenseite eines Gebäudes (16) vor einer Gebäudeöffnung anordenbar ist, und dass die Schussfäden (20) horizontal verlaufen.

11. Lichtlenksystem nach einem der Ansprüche 1 bis 10, **dadurch gekennzeichnet, dass** die Schussfäden (20) an ihrer dem Lichteinfallsbereich zugewandten Außenseite durchgängig frei von den Kettfäden (22) sind.

12. Lichtlenksystem nach einem der Ansprüche 1 bis 11, **dadurch gekennzeichnet, dass** die Schussfäden (20) horizontal verlaufen und eine schräg nach oben in den Lichteinfallsbereich weisende Reflexionsfläche (46) besitzen, und dass die Schussfäden (20) in einem gegenseitigen Abstand gehalten sind, wobei der Abstand so bestimmt ist, dass schräg von oben einfallendes Licht oberhalb eines gegebenen Höhengrenzwinkels in den Lichteinfallsbereich (13) zurückgeworfen und darunter in den von dem Lichteinfallsbereich abgewandten Raum (14) zwischen den Schussfäden (20) durchgelassen wird.

13. Lichtlenksystem nach Anspruch 12, **dadurch gekennzeichnet, dass** der Abstand der Schussfäden (20) einen definierten Wert zwischen 0,05 mm und 0,1 mm besitzt.

14. Lichtlenksystem nach Anspruch 12 oder 13, **dadurch gekennzeichnet, dass** der Höhengrenzwinkel im Bereich zwischen 40° und 50° beträgt.

## Claims

1. A light-directing system, in particular for sunlight, comprising a textile fabric (12) which is positioned or is positionable in a light-incidence region in front of a space (14) to be shielded or to be illuminated, and has a weft-thread layer (26) which is formed from a multiplicity of weft threads (20), wherein the weft threads (20) are stretched in a substantially linear manner and delimit mesh openings (24) of the textile fabric (12), wherein the weft threads (20) are disposed in weft-thread groups (42) having thread diameters which vary in a group wise manner, such that a plurality of weft threads (20) which differ from one another in their thread diameter are grouped in every weft-thread group, wherein the lateral portions (32) of the weft-thread groups (42) are uniformly oriented, **characterized in that** the textile fabric (12) has a dual-layer thread structure of warp threads (22) forming a warp-thread layer (28) and of weft threads (20) forming a weft-thread layer (26) which is parallel with said warp-thread layer (28), wherein the warp threads (22) and the weft threads (20) are interconnected by binder threads (30) and the weft threads (20) bear on one side of the warp-thread layer (28).

2. The light-directing system as claimed in claim 1, **characterized in that** the weft-thread groups (42) by way of at least one lateral portion (32) form a reflector for reflecting incident light.

3. The light-directing system as claimed in claim 1 or 2, **characterized in that** at least one side portion (32) which faces away from the space (14) is exposable as a light-directing area (36) to incident light.

4. The light-directing system as claimed in one of claims 1 to 3, **characterized in that** the weft threads (20) are provided with a light-reflecting or light-absorbing coating (40) and/or are dyed dark.

5. The light-directing system as claimed in one of claims 1 to 4, **characterized in that** the weft threads (20) in a delimited angular range are uniformly coated so as to be reflective or absorbent.

6. The light-directing system as claimed in claim 3, **characterized in that** the light-directing area (36) forms a light-permeable surface such that light is directed through the transparent weft threads (20) into the space (14) to be illuminated.

7. The light-directing system as claimed in one of claims 1 to 6, **characterized in that** the weft threads (20) are formed from a monofilament thread material.

8. The light-directing system as claimed in one of claims 1 to 7, **characterized in that** the textile fabric (12) is mounted so as to be two-dimensional in a mounting construction (18) or is unrollable therefrom.

9. The light-directing system as claimed in one of claims 1 to 8, **characterized in that** the textile fabric (12) is embedded in a transparent support plate or composite structure, in particular in laminated glass.

10. The light-directing system as claimed in one of claims 1 to 9, **characterized in that** the textile fabric (12) is disposable on the external side of a building (16), in front of a building opening, and **in that** the weft threads (20) run horizontally.

11. The light-directing system as claimed in one of claims 1 to 10, **characterized in that** the weft threads (20), on the external side thereof that faces the light-incidence region, are free from warp threads (22) throughout.

12. The light-directing system as claimed in one of claims 1 to 11, **characterized in that** the weft threads (20) run horizontally and have a reflective area (46) which points obliquely upward into the light-incidence region, and **in that** the weft threads (20) are held so as to be mutually spaced apart, wherein the spacing is determined such that incident light from obliquely above, when above a given height-related critical angle, is reflected into the light-incidence region (13) and, when therebelow, is passed between the weft threads (20) through into the space (14) that faces away from the light-incidence region.

13. The light-directing system as claimed in claim 12, **characterized in that** the spacing of the weft threads (20) has a defined value between 0.05 mm and 0.1 mm.

14. The light-directing system as claimed in claim 12 or 13, **characterized in that** the height-related critical angle is in the range between 40° and 50°.

## Revendications

1. Système déflecteur de lumière, en particulier pour la lumière du soleil, comprenant un matériau en feuille textile (12) qui peut être positionné dans une zone d'incidence de la lumière devant une pièce (14) à protéger ou à éclairer et qui présente une couche de fil de trame (26) formée par une pluralité de fils de trame (20), les fils de trame (20) étant étirés sensiblement de façon rectiligne et définissant des ouvertures de grille (24) du matériau en feuille (12), les fils de trame (20) étant disposés en groupes de fils de trame (42) avec des diamètres de fils variant par groupe, de sorte que plusieurs fils de trame (20) sont regroupés dans chaque groupe de fils de trame (42), lesquels diffèrent les uns des autres par leur diamètre de fil, les parties latérales (32) des groupes de fils de trame (42) étant orientées de manière uniforme, **caractérisé en ce que** le matériau en feuille (12) présente une structure de fils à deux couches comprenant des fils de chaîne (22) formant une couche de fils de chaîne (28) et des fils de trame (20) formant une couche de fils de trame (26) parallèle à celle-ci, les fils de chaîne (22) et les fils de trame (20) étant reliés entre eux par des fils de liaison (30) et les fils de trame (20) reposant sur un côté de la couche de fils de chaîne (28).

2. Système déflecteur de lumière selon la revendication 1, **caractérisé en ce que** les groupes de fils de trame (42) présentant au moins une partie latérale (32) forment un réflecteur pour réfléchir la lumière incidente.

3. Système déflecteur de lumière selon la revendication 1 ou 2, **caractérisé en ce qu'**au moins une partie latérale (32) opposée à la pièce (14) peut être influencée par la lumière incidente en tant que surface directrice de lumière (36).

4. Système déflecteur de lumière selon l'une des revendications 1 à 3, **caractérisé en ce que** les fils de trame (20) sont pourvus d'un o réfléchissant la lumière du revêtement absorbant (40) et/ou sont de couleur foncée.

5. Système déflecteur de lumière selon l'une des revendications 1 à 4, **caractérisé en ce que** les fils de trame (20) sont revêtus uniformément de manière réfléchissante ou absorbante dans une plage angulaire limitée.

6. Système déflecteur de lumière selon la revendication 3, **caractérisé en ce que** la surface directrice de lumière (36) forme une surface translucide, de sorte que la lumière est déviée à travers les fils de trame transparents (20) dans l'espace (14) à éclairer.

7. Système déflecteur de lumière selon l'une des revendications 1 à 6, **caractérisé en ce que** les fils de trame (20) sont formés d'un matériau filamenteux mono-filament.

8. Système déflecteur de lumière selon l'une des revendications 1 à 7, **caractérisé en ce que** le matériau en feuille textile (12) est étiré ou déroulé sur une surface dans une construction servant de support (18).

9. Système déflecteur de lumière selon l'une des revendications 1 à 8, **caractérisé en ce que** le matériau en feuille textile (12) est intégré dans une plaque de support transparente ou une structure composite, en particulier dans un verre composite.

10. Système déflecteur de lumière selon l'une des revendications 1 à 9, **caractérisé en ce que** le matériau en feuille textile (12) peut être disposé à l'extérieur d'un bâtiment (16) devant une ouverture de bâtiment, et **en ce que** les fils de trame (20) s'étendent horizontalement.

11. Système déflecteur de lumière selon l'une des revendications 1 à 10, **caractérisé en ce que** les fils de trame (20) sont continuellement exempts des fils de chaîne (22) sur leur face extérieure tournée vers la zone d'incidence de la lumière.

12. Système déflecteur de lumière selon l'une des revendications 1 à 11, **caractérisé en ce que** les fils de trame (20) s'étendent horizontalement et présentent une surface de réflexion (46) dirigée obliquement vers le haut dans la zone d'incidence de la lumière, et **en ce que** les fils de trame (20) sont maintenus à une distance mutuelle, la distance étant déterminée de sorte que la lumière incidente provenant du haut soit renvoyée obliquement dans la zone d'incidence de lumière (13) au-dessus d'un angle limite de hauteur donné et qu'elle soit transmise notamment dans la pièce (14) entre les fils de trame (20), à distance de la zone d'incidence de lumière.

13. Système déflecteur de lumière selon la revendication 12, **caractérisé en ce que** la distance entre les fils de trame (20) a une valeur définie entre 0,05 et 0,1 mm.

14. Système déflecteur de lumière selon la revendication 12 ou 13, **caractérisé en ce que** l'angle limite de hauteur est compris entre 40 et 50 °.
